# EUROPÄISCHE PATENTSCHRIFT

(11) **EP 2 085 729 B1**
(45) Veröffentlichungstag und Bekanntmachung des Hinweises auf die Patenterteilung: **14.10.2009**
(21) Anmeldenummer: 09075031.6
(22) Anmeldetag: 18.01.2009
(51) Int. Cl.: F27B 17/02, G01N 31/12, G01N 30/12

(54) **Hochtemperatur-Rohrofen für die Pyrolyse**
High temperature tube furnace for pyrolysis
Four à tubes haute température pour la pyrolyse

(30) Priorität: 29.01.2008 DE 102008007354
(43) Veröffentlichungstag der Anmeldung: 05.08.2009
(73) Patentinhaber: Stiftung Alfred-Wegener-Institut für Polar- und Meeresforschung, 27570 Bremerhaven (DE)
(72) Erfinder: Bock, Michael, 72070 Tübingen (DE); Dunker, Erich, 27607 Langen (DE)

(56) Entgegenhaltungen:
- US-A- 3 972 682
- US-A- 4 087 249
- US-A- 4 919 893

## Beschreibung

Die Erfindung bezieht sich auf einen Hochtemperatur-Rohrofen für die Pyrolyse mit einer konzentrischen Anordnung aus einem Rohrgehäuse, einer thermischen Isolierung, einem in elektrisch isolierenden und hochtemperaturfesten Heizrohrhalterungen gelagerten Sinter-Heizrohr, einem gelagerten Zweiloch-Keramikrohr und einer Pyrolysekapillare, wobei das Sinter-Heizrohr mit einem Heizstrom aus einer Spannungsversorgung beaufschlagt wird.

Viele Stoffe müssen zunächst einer Abbaureaktion unterworfen werden, um ihre Produkte mit modernen und sensitiven Detektoren untersuchen zu können. Der Abbau kann mit Hilfe der Pyrolyse geschehen. Unter dem Begriff "Pyrolyse" wird die Zersetzung von flüssigen oder gasförmigen Stoffen durch Zuführung von thermischer Energie bei Temperaturen zwischen 1000 und 1500°C unter Sauerstoffausschluss verstanden. In einem von außen erhitzten Reaktorraum, der von einem Trägergasstrom mit Analyt oder einer unverdünnt zu pyrolysierenden Substanz durchflossen wird, kann eine sauerstofffreie Atmosphäre eingestellt werden. Beispielsweise kann Methan gaschromatographisch von restlichen Luftkomponenten abgetrennt werden und in einem kontinuierlichen Trägergasstrom (Helium) durch einen Pyrolysereaktor geleitet werden. Hierbei entstehen elementarer Kohlenstoff, der sich in der Pyrolysekapillare absetzt, und Wasserstoff, der anschließend in einem Isotopenverhältnis-Massenspektrometer auf seine isotopische Zusammensetzung hin analysiert werden kann. Dies ermöglicht Rückschlüsse auf die verschiedenen Quellen von atmosphärischem Methan (beispielsweise eingeschlossenen in gewonnenen Eisbohrkernen mit einem Alter von 100 000 Jahren und mehr) zu ziehen. Der Reaktorraum kann durch Heizgase, aber auch durch elektrische Heizungssysteme erhitzt werden. Bei einer Verwendung von Reaktorkapillaren bieten sich so genannte "Rohröfen" als kostengünstige Möglichkeit an, die Pyrolyse als Wärmebehandlung unter gut kontrollierten Bedingungen durchzuführen.

### STAND DER TECHNIK

Aus der DE 2110 865 B ist ein Rohrofen bekannt, dessen Ofenraum von zwei konzentrisch angeordneten Rohren gebildet wird, die von einem rohrförmigen Heizelement und einer ebenfalls rohrförmigen Außenisolierung umgeben sind. Der durch die beiden konzentrischen Rohre entstehende Ringspalt wird von zwei an den jeweiligen Rohrwänden anliegenden Kapillarschichten und einem dazwischen liegenden Hohlraum ausgefüllt. Zur Aufrechterhaltung des Ringspalts und zur Verbindung der Kapillarschichten sind Stützstrukturen aus einem kapillaren Material vorgesehen. Der Ringspalt mit seinem Aufbau wirkt als Wärmerohr, bei dem das Fluid in dem kapillaren Material als Flüssigkeit und in dem Hohlraum gasförmig vorliegt. Die Eigenschaften des Wärmerohrs bewirken bei einer äußeren Beheizung durch das rohrförmige Heizelement eine sehr gleichmäßige Temperaturverteilung auf dem Ofenraum. Der vorgestellte Rohrofen dient z.B. als schwarzer Körper zur Kalibrierung von Thermometern oder zur Produktion von Halbleitermaterialien.

Aus der US 3 972 682 ist ein Hochtemperatur-Pyrolyse-Rohrofen bekannt, der mit einer konzentrischen Anordnung aus einem Rohrgehäuse, einer thermischen Isolierung, einem in elektrisch isolierenden und hochtemperaturfesten Heizrohrhalterungen gelagerten Sinter-Heizrohr, einem gelagerten Zweiloch-Keramikrohr und einer Pyrolysekapillare aufweist, wobei das Sinter-Heizrohr mit einem Heizstrom aus einer Spannungsversorgung beaufschlagt wird.

Der Hochtemperatur- Rohrofen, von dem die vorliegende Erfindung ausgeht, ist kommerziell erhältlich von der Firma Thermo Fisher Scientific unter der Bezeichnung "Finnigan GC-C/TC III" (Gas Chromatography Temperature Conversion) und wird in einem Firmenprospekt aus dem Jahre 2004, erhältlich unter BR 30033_E 06/04, beschrieben. Der bekannte Hochtemperatur-Rohrofen für die Pyrolyse ist mit seinen Abmessungen unter einem halben Meter sehr leicht handhabbar und weist eine konzentrische Anordnung von verschiedenen Rohren auf. Zentral verläuft eine Pyrolysekapillare. Die Pyrolysekapillare in einem Zweiloch-Keramikrohr in Form eines, massiven Keramikrohrs mit zwei axialen Durchführungen angeordnet. In der zweiten Durchführung kann das Zweiloch-Keramikrohr auch noch ein Thermoelement zur Temperaturkontrolle aufnehmen. Pyrolysekapillare und Zweiloch-Keramikrohr werden von einem Sinter-Heizrohr, das von einem elektrischen Heizstrom durchflossen werden kann und sich dabei auf Temperaturen um 1430 °C aufheizt, erhitzt. Dazu ist das Zweiloch-Keramikrohr von dem Sinter-Heizrohr berührend ummantelt und wird so gehaltert und fixiert. Eine andere Halterung des Zweiloch-Keramikrohrs ist nicht vorgesehen. Auf der Außenseite wird das Sinter-Heizrohr berührend umgeben von Keramikfasern, die eine thermische Isolierung bilden. Diese Isolierung erstreckt sich bis zum Rohrgehäuse, das den konzentrischen Aufbau abschließt. An seinen beiden Enden ist das Sinter-Heizrohr in elektrisch isolierenden und hochtemperaturfesten Heizrohrhalterungen gelagert. Hierbei handelt es sich um unflexible Lagerungen aus Keramikringen. Diese werden abschließend jeweils in ein Ende des Rohrgehäuses eingeschoben.

Durch die berührende Anordnung des Sinter-Heizrohrs mit dem Zweiloch-Keramikrohr und der thermischen Isolierung entstehen Hot-Spots, die die Lebensdauer des Heizrohres stark begrenzen. Ein Austausch von untauglich gewordenen Sinter-Heizrohren ist aber bei dem bekannten Rohrofen problematisch, weil die Lagerung des Sinter-Heizrohrs in den Heizrohrhalterungen in Form von Keramikringen erfolgt, die in ihren Abmaßen genau an die Abmaße des Sinter-Heizrohrs angepasst sind. Sinter-Heizrohre sind aber aufgrund des Sinterherstellungsprozesses nur mit relativ großen Toleranzen herstellbar. Ein Austausch des Sinter-Heizrohrs macht somit auch den Austausch der Heizrohrhalterungen erforderlich. Dadurch wird der ganz Austauschprozess so aufwändig, dass bevorzugt ein kompletter neuer Rohrofen verwendet wird. Von Seiten des Herstellers wird grundsätzlich nur ein komplett neuer Rohrofen angeboten, der mit ca. 5000 Euro sehr viel kostenintensiver ist als ein Sinter-Heizrohr mit ca. 100 Euro.

Die Spannungsversorgung zur Erzeugung des Heizstroms für das Sinter-Heizrohr besteht aus einem Transformator, bei dem die Spannung durch Umstecken zwischen 40 V und 80 V verändert werden kann (Stell-Transformator). Eine Erhöhung der Spannung wird notwendig, da mit der Alterung der verwendeten Sinter-Heizrohre (Siliziumkarbid SiC) deren elektrischer Widerstand ansteigt. Um die gewünschte Leistung und damit die für die Pyrolyse benötigte Temperatur erreichen zu können, muss wiederholt (und diskret, also mit Abschaltungen) die angelegte Spannung erhöht werden. Der diskontinuierliche Betrieb belastet aber das Sinter-Heizrohr ebenfalls und führt zu einer schnelleren Betriebsuntauglichkeit.

### AUFGABENSTELLUNG

Die **AUFGABE** für die vorliegende Erfindung ist daher darin zu sehen, einen Hochtemperatur-Rohrofen für die Pyrolyse der eingangs beschriebenen, gattungsgemäßen Art anzugeben, bei dem zunächst ein Austausch des Sinter-Heizrohrs einfach möglich ist. Durch Weiterbildungen der Erfindung soll es aber weiterhin auch möglich sein, das Auftreten von Hot-Spots weitestgehend zu vermeiden sowie eine schonende Spannungsversorgung zu gewährleisten. Beide Maßnahmen führen zu einer bedeutsam längeren Lebensdauer des Sinter-Heizrohrs. Die **LÖSUNG** für die Aufgabe ist dem Hauptanspruch zu entnehmen. Vorteilhafte Weiterbildungen werden in den Unteransprüchen aufgezeigt und im Folgenden im Zusammenhang mit der Erfindung näher erläutert.

Bei dem erfindungsgemäßen Rohrofen besteht jede thermisch isolierende und hochtemperaturfeste Heizrohrhalterung - sinnvoll ist an beiden Rohrofenenden eine Heizrohrhalterung vorgesehen - aus zumindest drei radial angeordneten und auch radial verschieblich fixierbaren Keramikstiften. Jeder Keramikstift ist in einer Klemmschelle gelagert, die am Rohrgehäuse festgelegt ist. Zwischen den Spitzen der Keramikstifte wird das Sinter-Heizrohr gelagert. Mittels drei radialen Keramikstiften kann jede Position des Sinter-Heizrohrs um die zentrale Achse des Rohrofens, die im virtuellen Schnittpunkt der radialen Keramikstifte liegt, eingestellt werden. Durch die genannten Maßnahmen kann bei der Erfindung das Sinter-Heizrohr durch Lösen der Klemmschellen und Entfernen der Keramikstifte einfach ausgetauscht werden. Ein neues Sinter-Heizrohr mit anderen Durchmesserabmessungen kann wieder passgenau zentriert werden durch die radiale Einstellbarkeit der Keramikstifte. Produktionsbedingte Unterschiede im Durchmesser des Sinter-Heizrohrs können so problemlos ausgeglichen werden.

Bevorzugt sind die zumindest drei Klemmschellen einer Heizrohrhalterung in einem Gehäusedeckel gelagert, der Aussparungen für die Keramikstifte aufweist und das Rohrgehäuse zentriert abschließt. Mittels eines Gehäusedeckels können die Klemmschellen einfach und herausnehmbar gelagert werden. Bei zwei Heizrohrhalterungen werden entsprechend zwei Gehäusedeckel benötigt. Diese sorgen zudem für einen beidseitigen Abschluss des Rohrofens, sodass die erzeugte Wärme nicht entweichen kann. Weiter vereinfacht sich noch die Austauschbarkeit des Heizrohrs, wenn die Klemmschellen Verschraubungen zur Fixierung der Keramikstifte und Lagerung in dem Gehäusedeckel aufweisen. Beispielsweise kann pro Keramikstift eine Verschraubung mit einer einzelnen Schraube vorgesehen sein. Durch Lösen der Schraube wird die Klemmschelle geöffnet und der Keramikstift kann radial verschoben werden. Durch Anziehen der Schraube werden sowohl der Keramikstift in der Klemmschelle als auch die Klemmschelle am Gehäusedeckel fixiert. Weiterhin ergibt sich eine optimale axiale Einstellbarkeit des Sinter-Heizrohrs, wenn je Heizrohrhalterung drei Keramikstifte unter einem Winkel von 120° zueinander angeordnet sind. Eine achsengenaue Justage ist besonders wichtig, wenn das Sinter-Heizrohr als Siliziumkarbid-Sinterkörper ausgebildet ist, da sich bei der Herstellung relative große Durchmesserabweichungen ergeben.

Die zuvor genannten Maßnahmen dienen der einfachen Austauschbarkeit des Sinter-Heizrohrs bei dem Rohrofen nach der Erfindung. Diese muss gewährleistet sein, um schadhafte Sinter-Heizrohre austauschen und den Rohrofen weiterhin betreiben zu können. Eine zusätzliche Handhabungsverbesserung kann durch Vermeiden einer häufigen Schadhaftigkeit der Sinter-Heizrohre erreicht werden. Im Stand der Technik werden die Sinter-Heizrohre durch auftretende Hot-Spots und diskontinuierlichen Betrieb beschädigt. Bei Hot-Spots handelt es sich um lokale Überhitzungen, die durch direkten Kontakt des Sinter-Heizrohrs mit anderen Komponenten, insbesondere mit dem Zweiloch-Keramikrohr und der Isolierung, entstehen.

Eine erste Maßnahme zur Vermeidung von Hot-Spots besteht bei der Erfindung darin, dass das Zweiloch-Keramikrohr nicht mehr direkt im Sinter-Heizrohr gelagert ist, sondern dass eine diskrete Lagerung des Zweiloch-Keramikrohrs ohne eine Berührung mit dem Sinter-Heizrohr vorgesehen ist. Dazu ist das Zweiloch-Keramikrohr bevorzugt in Rohrhalterungen gelagert ist, die als am Rohrgehäuse festgelegte Zentriersterne ausgebildet sind. Dabei erfolgt die Lagerung des Zweiloch-Keramikrohrs unter Bildung eines zweiten konzentrischen Luftspalts zum Sinter-Heizrohr. Eine Berührung von Zweiloch-Keramikrohr und Sinter-Heizrohr und damit die Entstehung von Hot-Spots sind so sicher vermieden. Vorteilhaft ist auch hier an jedem Ende des Rohrofens ein Zentrierstern vorgesehen, sodass auch das Zweiloch-Keramikrohr in zwei Halterungen gelagert wird. Zunächst wird bei dem Rohrofen nach der Erfindung das Sinter-Heizrohr durch die radialen Keramikstifte zentriert, dann wird das Zweiloch-Keramikrohr durch Nutzung des Zentriersterns in der Achse des Sinter-Heizrohrs ausgerichtet, sodass keine Berührungspunkte zwischen Sinter-Heizrohr und Keramikrohr entstehen. Bevorzugt kann jeder Zentrierstern drei, unter einem Winkel von 120° zueinander radial oder winklig zur Radialebene angeordnete Stützrippen aufweisen, die in ihrem Schnittpunkt das Zweiloch-Keramikrohr lagern. Analog zur Lagerung des Sinter-Heizrohrs in einem Dreibein aus Keramikstiften zeigt ein Zentrierstern mit drei Stützrippen unter 120° optimale Stütz- und Festigkeitseigenschaften. Der Zentrierstern stützt sich ebenfalls am Rohrgehäuse ab. Damit stützen sich die Halterungen von Sinter-Heizrohr und Zweiloch-Keramikrohr beide zwar am Rohrgehäuse ab, dies aber unabhängig voneinander. Bei dem bekannten Rohrofen existiert keine eigene Halterung für das Zweiloch-Keramikrohr, es wird lediglich berührend in das Sinter-Heizrohr (SiC) eingeschoben, dies verursacht Hot Spots an der Innenseite des Sinter-Heizrohres. Weiterhin kann das Zweiloch-Keramikrohr in der zweiten axialen Durchgangsöffnung mit einem Thermoelement ausgerüstet sein. Die Lagerung in den beiden Zentriersternen lässt dies ohne weiteres zu.

Weiterhin entstehen auch keine Berührungspunkte zwischen dem Sinter-Heizrohr und der Isolierung, wenn die Isolierung als Isoliermantel an der Innenseite des Rohrgehäuses unter Bildung eines konzentrischen Luftspalts zum Heizrohr ausgebildet ist. Der Luftspalt vermeidet die Berührung und damit die Entstehung von Hot-Spots an der Außenseite des Sinter-Heizrohres. Außerdem dient sie als zusätzliche thermische Isolierung. Eine besonders gute und definierte Isolierung wird erreicht, wenn der Isoliermantel aus keramischem Fasermaterial gebildet ist, das zwischen dem Rohrgehäuse und einem konzentrischen Innenrohr angeordnet ist. Derartiges keramisches Fasermaterial ist hochgradig feuerfest und hält Temperaturen von 1.500°C dauerhaft Stand. Das Innenrohr kann bevorzugt aus einem zylinderförmigen Lochblech aus Edelstahl bestehen. Somit wird eine doppelwandige Rohrkonstruktion mit einer Isolierung zwischen den beiden konzentrischen Gehäusen gebildet.

Eine weitere Lebensdauerverlängerung des Sinter-Heizrohrs ergibt sich bei der Erfindung vorteilhaft durch eine gegenüber dem Stand der Technik andere Spannungsversorgung. Dort muss aufgrund der Alterung der SiC-Elemente die Spannung im Betrieb erhöht werden. Dazu muss der Ofen ausgeschaltet werden, um den Transformator auf die nächst höhere Spannungsstufe umzustecken. SiC Elemente haben jedoch bei einer Betriebstemperatur von oberhalb 1000°C die längste Lebensdauer, wenn sie durchgehend betrieben werden. Bei der Erfindung wird deshalb eine kontinuierliche angepasste Spannungsversorgung eingesetzt, die keine Betriebsunterbrechungen erforderlich macht. Vorteilhaft erfolgt die Spannungsversorgung bei der Erfindung deshalb mittels eines Leistungsumsetzers zur Erzeugung einer gepulsten Gleichspannung und eines Temperaturreglers, der die IST-Temperatur über das Thermoelement erhält. Bei dem Leistungsumsetzer kann es sich beispielsweise um den "JUMO IPC IGBT-Leistungsumsetzer' (Firma JUMO, Typenblatt 70.9050, 08.06/00389002) handeln, der der Ansteuerung von Heizlasten dient, die bislang einen Transformator (Stelltransformator oder Kombination eines Thyristorleistungsstellers mit Trafo) benötigt haben. Bedingt durch seine Arbeitsweise kann von einem elektronischen Transformator mit einer pulsierenden Gleichspannung am Ausgang gesprochen werden. Ein derartiger Transformator verbindet die Vorteile eines herkömmlichen Stelltransformators, wie z.B. die Amplitudenregelung und die sinusförmige Netzbelastung, mit den Vorteilen eines Thyristor-Leistungsschalters, z. B. Strombegrenzung, Lastüberwachung und unterlagerte Regelungen). Durch eine derartige Spannungsversorgung wird bei der Erfindung eine schonende elektrische Versorgung des Sinter-Heizrohrs gewährleistet. Der durch die Alterung bedingte Anstieg des elektrischen Widerstands des Sinter-Heizrohrs wird kontinuierlich ausgeglichen, es treten keine Betriebsunterbrechungen mit einem Abkühlen und anschließendem Hochheizen des Sinter-Heizrohrs auf. Weitere Ausführungen zu dem Rohrofen nach der Erfindung sind dem nachfolgenden speziellen Beschreibungsteil zu entnehmen.

### AUSFÜHRUNGSBEISPIEL

Ausbildungsformen des Rohrofens zur Pyrolyse nach der Erfindung werden nachfolgend anhand der schematischen Figuren zum weiteren Verständnis der Erfindung näher erläutert. Dabei zeigt die:
- **FIGUR 1**: einen Längsschnitt durch einen Hochtemperatur-Rohrofen (im Detail) und
- **FIGUR 2**: eine Frontansicht eines Hochtemperatur-Rohrofens

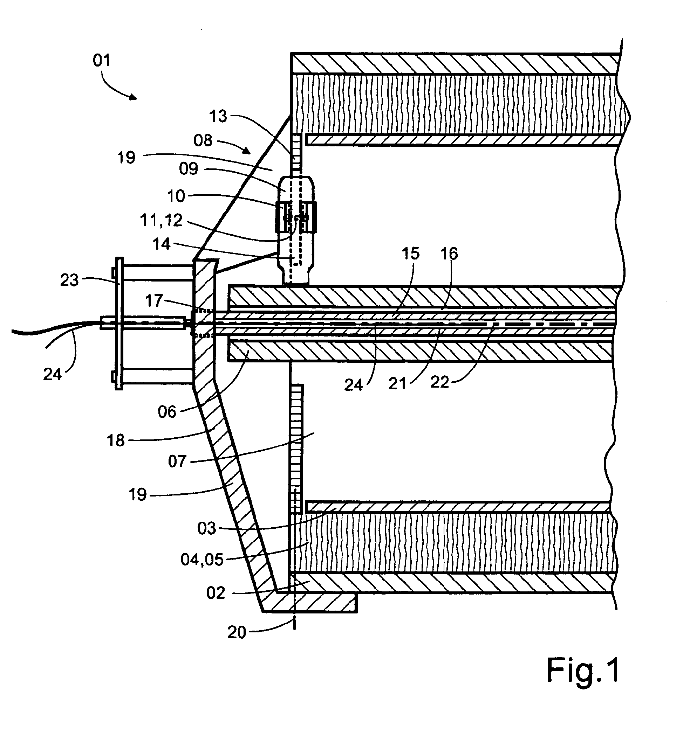

Die **FIGUR 1** zeigt einen Längsschnitt (im Detail im Bereich eines Ofenendes) durch einen Hochtemperatur-Rohrofen **01** für die Pyrolyse mit einem nach außen abschließenden Rohrgehäuse **02.** In diesem befindet sich eine konzentrische Anordnung aus weiteren Rohren. Zwischen einem Innenrohr **03** und dem Rohrgehäuse **02** ist eine thermische Isolierung **04** vorgesehen. Diese ist als Isoliermantel **05** aus Keramikfasern ausgebildet. Das Innenrohr **03** besteht aus einem zylinderförmigen Lochblech aus Edelstahl. Zu einem Sinter-Heizrohr **06,** beispielsweise aus Siliziumkarbid SiC, ist ein erster konzentrischer Luftspalt **07** gebildet, der für eine zusätzliche Isolierung des Sinter-Heizrohrs **06** sorgt, aber auch Hot-Spots durch Berührung zwischen Isolierung **04** und Sinter-Heizrohr **06** verhindert.

Das Sinter-Heizrohr **06** ist in zwei elektrisch isolierenden und hochtemperaturfesten Heizrohrhalterungen **08** an beiden Enden des Rohrgehäuses **02** gelagert. Jede der beiden Heizrohrhalterungen **08** besteht im gewählten Ausführungsbeispiel aus drei radial, unter einem Winkel von 120° zueinander angeordneten Keramikstiften **09.** Jeder Keramikstift **09** ist in einer Klemmschelle **10** radial verschieblich gelagert. Jede Klemmschelle **10** ist über eine Verschraubung **11,** beispielsweise mit einer einzelnen Schraube **12,** an einem Gehäusedeckel **13** befestigt, der Aussparungen **14** für die Keramikstifte **09** aufweist und das Rohrgehäuse **02** zentriert abschließt. Über die Verschraubungen **11** wird auch die Klemmung der Keramikstifte **09** erzeugt. Im Schnittpunkt der drei Keramikstifte **09** wird das Sinter-Heizrohr **06** zentriert gelagert. Eine Anpassung an beliebige Außendurchmesser des Sinter-Heizrohrs **06,** die produktionsbedingt nach einem Austausch auftreten können, ist ohne weiteres möglich.

Ein Austausch des Sinter-Heizrohrs **06** erfolgt nach einem Lösen der Verschraubungen **11** und radialem Zurückziehen der Keramikstifte **09.** Zuvor wird ein Zentrierstern **18** (s.u.) an einem Ofenende abgeschraubt. Nach Einschieben des neuen Sinter-Heizrohrs **06** werden die Keramikstifte **09** an das Sinter-Heizrohrs **06** angeschoben, das Sinter-Heizrohr **06** passend zentriert und die Verschraubungen **11** festgezogen. Anschließend wird der Zentrierstern **18** wird aufgesetzt und festgeschraubt.

Im Inneren des Sinter-Heizrohrs **06** ist ein Zweiloch-Keramikrohr **15** konzentrisch angeordnet. Dabei verbleibt ein zweiter konzentrischer Luftspalt **16** zwischen den beiden Rohren **06, 15,** sodass auch hier keine Hot-Spots durch Berührung auftreten können. Jedoch ist der zweite Luftspalt **16** so gering bemessen, dass eine gute Wärmeübertragung vom Sinter-Heizrohr **06** auf das Zweiloch-Keramikrohr **15** erfolgen kann. Die konzentrische Lagerung des Zweiloch-Keramikrohrs **15** erfolgt über ein zentrales Aufnahmeloch **17** im Zentrierstern **18** an beiden Enden des Rohrgehäuses **02.** Jeder Zentrierstern **18** ist zentriert am Rohrgehäuse **02** festgelegt, sodass die Lagerung des zentral angeordneten Zweiloch-Keramikrohr **15** unter Bildung eines konzentrischen Luftspalts zum Sinter-Heizrohr **06** erfolgt. Jeder Zentrierstern **18** besteht im gewählten Ausführungsbeispiel aus drei, unter einem Winkel von 120° angeordnete Stützrippen **19,** in deren Schnittpunkt das zentrale Aufnahmeloch **17** für das Zweiloch-Keramikrohr **15** angeordnet ist. Weiterhin sind die Stützrippen **19** unter einem Winkel zur Radialebene des Rohrofen **01** angeordnet, sodass sich eine Vorlagerung der Lagerung des Zweiloch-Keramikrohr **15** beiderseits des Rohrgehäuses **02** vor die Gehäusedeckel **13** ergibt. Die Zentriersterne **18** stützen sich am Rohrgehäuse **02** ab und sind durch weitere Verschraubungen **20** fixiert. Diese Verschraubung **20** fixiert auch die Gehäusedeckel **13.** Durch das bündige Abschließen kann aus dem Rohrofen **01** kaum Konvektionswärme nach vorne und hinten austreten.

In einer der beiden Durchgangsöffnungen **21** des Zweiloch-Keramikrohrs **15** ist die Pyrolysekapillare **22** gelagert. Die Pyrolysekapillare **22** wird in zwei Brückenhalterungen **23** gelagert, die auf den Zentriersternen **18** befestigt sind. Im gezeigten Ausführungsbeispiel wird an dieser Brückenhalterung **23** eine Kopplung von Pyrolysekapillare **22** auf eine gaschromatographische Säule eingehängt. Hier wird die beispielsweise interessierende Spezies Methan von den restlichen Luftkomponenten Stickstoff, Sauerstoff, Argon, Kohlendioxid getrennt. In der Pyrolysekapillare **22** wird beispielsweise Methan im Trägergas Helium geleitet und pyrolytisch bei ca. 1430 °C gespalten. Die Temperatur wird mittels eines Thermoelements **24,** das sich in der zweiten Durchgangsöffnung **21** des Zweiloch-Keramikrohrs **15** befindet, kontrolliert und von einem Temperaturregler, der mit einer Spannungsversorgung (in der **FIGUR 1** nicht weiter dargestellt) verbunden ist, geregelt. Die Spaltprodukte werden dann anschließend beispielsweise massenspektrometrisch untersucht, um beispielsweise im Falle der Analyse auf Methan den Wasserstoffanteil zu bestimmen.

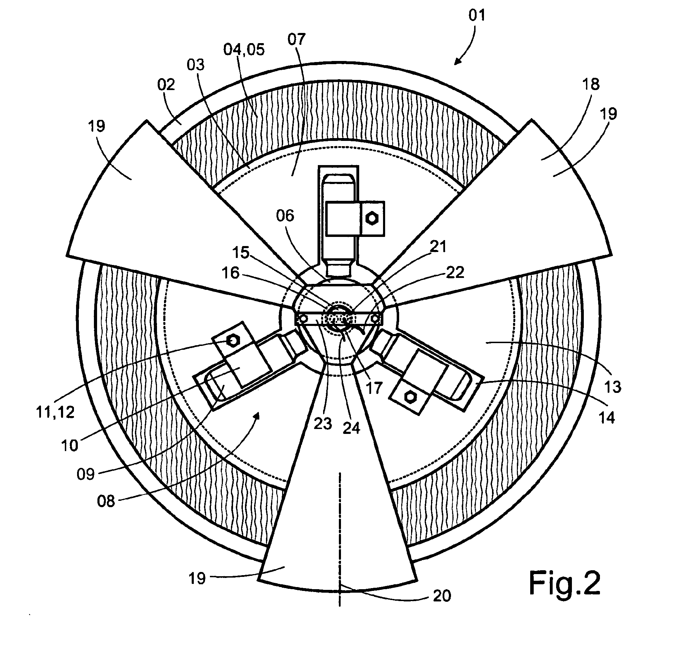

Die **FIGUR 2** zeigt eine Frontansicht des Hochtemperatur-Rohrofens **01.** Gleiche Bezugszeichen wie in **FIGUR 1** bezeichnen gleiche Bauteile. Der Hochtemperatur-Rohrofen **01** besteht aus dem nach außen abschließenden Rohrgehäuse **02,** dem Innenrohr **03** und der thermischen Isolierung **04** als Isoliermantel **05** aus Keramikfasern dazwischen. Zu dem Sinter-Heizrohr **06,** das in zwei Heizrohrhalterungen **08** an beiden Enden des Rohrgehäuses **02** gelagert ist, besteht ein erster konzentrischer Luftspalt **07.** Die Heizrohrhalterungen **08** bestehen aus je drei Keramikstiften **09** mit einer Klemmschelle **10,** die über eine Verschraubung **11** aus einer Schraube **12** an einem Gehäusedeckel **13** mit einer Aussparungen **14** für die Keramikstifte **09** radial verschieblich gelagert und fixierbar sind. Im Schnittpunkt der drei Keramikstifte **09** wird das Sinter-Heizrohr **06** zentrierbar gelagert.

Im Inneren des Sinter-Heizrohrs **06** ist das Zweiloch-Keramikrohr **15** konzentrisch angeordnet, wobei ein zweiter konzentrischer Luftspalt **16** verbleibt. Die konzentrische Lagerung des Zweiloch-Keramikrohrs **15** erfolgt über zwei zentrale Aufnahmelöcher **17** an beiden Enden des Rohrgehäuses **02.** Jede Rohrhalterung **17** ist als Zentrierstern **18** ausgebildet, der aus drei Stützrippen **19** besteht. Die Zentriersterne **18** stützen sich am Rohrgehäuse **02** ab und sind durch weitere Verschraubungen **20** fixiert. Diese Verschraubung 20 zentriert auch den Gehäusedeckel **13** auf beiden Seiten des Rohrofens **01.**

Im Inneren des Zweiloch-Keramikrohr **15** befindet sich die in zwei Brückenhalterungen **23** auf den Zentriersternen **18** gelagerte Pyrolysekapillare **22.** Die Temperatur neben der Pyrolysekapillare **22,** die sich in der ersten Durchgangsöffnung **21** des Zweiloch-Keramikrohrs **15** befindet, wird mittels des Thermoelements **24** gemessen, das sich in der zweiten Durchgangsöffnung **21** im Zweiloch-Keramikrohr **15** befindet.

### BEZUGSZEICHENLISTE

- 01: Hochtemperatur-Rohrofen
- 02: Rohrgehäuse
- 03: Innenrohr
- 04: thermische Isolierung
- 05: Isoliermantel
- 06: Sinter-Heizrohr
- 07: erster konzentrischer Luftspalt
- 08: Heizrohrhalterung
- 09: Keramikstift
- 10: Klemmschelle
- 11: Verschraubung
- 12: Schraube
- 13: Gehäusedeckel
- 14: Aussparung
- 15: Zweiloch-Keramikrohr
- 16: zweiter konzentrischer Luftspalt
- 17: Aufnahmeloch
- 18: Zentrierstern
- 19: Stützrippe
- 20: weitere Verschraubung
- 21: Durchgangsöffnungen in 15
- 22: Pyrolysekapillare
- 23: Brückenhalterung
- 24: Thermoelement

## Patentansprüche

1. Hochtemperatur-Rohrofen für die Pyrolyse mit einer konzentrischen Anordnung aus einem Rohrgehäuse, einer thermischen Isolierung, einem in elektrisch isolierenden und hochtemperaturfesten Heizrohrhalterungen gelagerten Sinter-Heizrohr, einem gelagerten Zweiloch-Keramikrohr und einer Pyrolysekapillare, wobei das Sinter-Heizrohr mit einem Heizstrom aus einer Spannungsversorgung beaufschlagbar ist,
**DADURCH GEKENNZEICHNET, dass**
jede Heizrohrhalterung (08) zumindest drei radial angeordnete und jeweils in einer am Rohrgehäuse (02) festgelegten Klemmschelle (10) radial verschieblich fixierbare Keramikstifte (09) aufweist, zwischen deren Spitzen das Sinter-Heizrohr (06) gelagert ist.

2. Hochtemperatur-Rohrofen nach Anspruch 1
**DADURCH GEKENNZEICHNET, dass**
die zumindest drei Klemmschellen (10) einer Heizrohrhalterung (08) in einem Gehäusedeckel (13) gelagert sind, der Aussparungen (14) für die Keramikstifte (09) aufweist und das Rohrgehäuse (02) zentriert abschließt.

3. Hochtemperatur-Rohrofen nach Anspruch 2,
**DADURCH GEKENNZEICHNET, dass**
die Klemmschellen (10) Verschraubungen (11) zur Fixierung der Keramikstifte (09) und Lagerung in dem Gehäusedeckel (13) aufweisen.

4. Hochtemperatur-Rohrofen nach Anspruch 1,
**DADURCH GEKENNZEICHNET, dass**
je Heizrohrhalterung (08) drei Keramikstifte (09) unter einem Winkel von 120° zueinander angeordnet sind.

5. Hochtemperatur-Rohrofen nach Anspruch 1,
**DADURCH GEKENNZEICHNET, dass**
das Sinter-Heizrohr (06) als Siliziumkarbid-Sinterkörper ausgebildet ist.

6. Hochtemperatur-Rohrofen nach Anspruch 1,
**DADURCH GEKENNZEICHNET, dass**
das Zweiloch-Keramikrohr (15) in zwei Aufnahmelöchern (17) gelagert ist, die zentral in am Rohrgehäuse (02) festgelegten Zentriersterne (18) angeordnet sind, wobei die Lagerung des Zweiloch-Keramikrohrs (15) unter Bildung eines zweiten konzentrischen Luftspalts (16) zum Sinter-Heizrohr (06) erfolgt.

7. Hochtemperatur-Rohrofen nach Anspruch 6,
**DADURCH GEKENNZEICHNET, dass**
jeder Zentrierstern (18) drei, unter einem Winkel von 120° zueinander radial oder winklig zur Radialebene angeordnete Stützrippen (19) aufweist, die in ihrem Schnittpunkt die Aufnahmelöcher (17) aufweisen.

8. Hochtemperatur-Rohrofen nach Anspruch 1,
**DADURCH GEKENNZEICHNET, dass**
das Zweiloch-Keramikrohr (15) in einer ersten Durchgangsöffnung (21) die Pyrolysekapillare (22) und in einer zweiten Durchgangsöffnung (21) ein Thermoelement (24) aufweist.

9. Hochtemperatur-Rohrofen nach Anspruch 1,
**DADURCH GEKENNZEICHNET, dass**
die Isolierung (04) als Isoliermantel (05) an der Innenseite des Rohrgehäuses (02) unter Bildung eines ersten konzentrischen Luftspalts (07) zum Sinter-Heizrohr (06) ausgebildet ist.

10. Hochtemperatur-Rohrofen nach Anspruch 9,
**DADURCH GEKENNZEICHNET, dass**
der Isoliermantel (05) aus keramischem Fasermaterial gebildet ist, das zwischen dem Rohrgehäuse (02) und einem konzentrischen Innenrohr (03) angeordnet ist.

11. Hochtemperatur-Rohrofen nach Anspruch 10,
**DADURCH GEKENNZEICHNET, dass**
das Innenrohr (03) aus einem zylinderförmigen Lochblech aus Edelstahl besteht.

12. Hochtemperatur-Rohrofen nach Anspruch 10,
**DADURCH GEKENNZEICHNET, dass**
die Gehäusedeckel (13) zentriert in dem Rohrgehäuse (02) gelagert sind.

13. Hochtemperatur-Rohrofen nach Anspruch 1 und Anspruch 8,
**DADURCH GEKENNZEICHNET, dass**
die Spannungsversorgung mittels eines Leistungsumsetzers zur Erzeugung einer gepulsten Gleichspannung und eines Temperaturreglers, der die IST-Temperatur über das Thermoelement (23) erhält, erfolgt.

## Claims

1. High-temperature tube furnace for pyrolysis with a concentric arrangement made up of a tube housing, thermal insulation, a sintering heating tube mounted in electrically insulating and high-temperature resistant heating tube mountings, a mounted two-hole ceramic tube and a pyrolysis capillary, wherein the sintering heating tube can be acted on with a heating current from a voltage supply,
**CHARACTERIZED in that**
each heating tube mounting (08) has at least three radially arranged ceramic pins (09), which pins can in each case be fixed in a radially displaceable manner in a clamp (10) fixed on the tube housing (02) and between the tips of which pins the sintering heating tube (06) is mounted.

2. High-temperature tube furnace according to Claim 1,
**CHARACTERIZED in that**
the at least three clamps (10) of a heating tube mounting (08) are mounted in a housing cover (13) which has cavities (14) for the ceramic pins (09) and closes the tube housing (02) in a centred manner.

3. High-temperature tube furnace according to Claim 2,
**CHARACTERIZED in that**
the clamps (10) have screw connections (11) for fixing the ceramic pins (09) and mounting in the housing cover (13).

4. High-temperature tube furnace according to Claim 1,
**CHARACTERIZED in that**
for each heating tube mounting (08) three ceramic pins (09) are arranged at an angle of 120° to one another.

5. High-temperature tube furnace according to Claim 1,
**CHARACTERIZED in that**
the sintering heating tube (06) is constructed as a silicon carbide sintering body.

6. High-temperature tube furnace according to Claim 1,
**CHARACTERIZED in that**
the two-hole ceramic tube (15) is mounted in two accommodation holes (17) which are arranged centrally in centring stars (18) fixed on the tube housing (02), wherein the mounting of the two-hole ceramic tube (15) takes place with the formation of a second concentric air gap (16) to the sintering heating tube (06).

7. High-temperature tube furnace according to Claim 6,
**CHARACTERIZED in that**
each centring star (18) has supporting ribs (19) arranged radially or at an angle to the radial plane at an angle of 120° to one another, which supporting ribs have the accommodation holes (17) at their point of intersection.

8. High-temperature tube furnace according to Claim 1,
**CHARACTERIZED in that**
the two-hole ceramic tube (15) has the pyrolysis capillary (22) in a first through opening (21) and a thermocouple (24) in a second through opening (21).

9. High-temperature tube furnace according to Claim 1,
**CHARACTERIZED in that**
the insulation (04) is constructed as an insulation jacket (05) on the inside of the tube housing (02) with the formation of a first concentric air gap (07) to the sintering heating tube (06).

10. High-temperature tube furnace according to Claim 9,
**CHARACTERIZED in that**
the insulation jacket (05) is formed from ceramic material which is arranged between the tube housing (02) and a concentric inner tube (03).

11. High-temperature tube furnace according to Claim 10,
**CHARACTERIZED in that**
the inner tube (03) consists of a cylindrical perforated plate made from stainless steel.

12. High-temperature tube furnace according to Claim 10,
**CHARACTERIZED in that**
the housing covers (13) are mounted in a centred manner in the tube housing (02).

13. High-temperature tube furnace according to Claim 1 and Claim 8,
**CHARACTERIZED in that**
the voltage supply takes place by means of a power converter for generating a pulsed DC voltage and a temperature controller which obtains the actual temperature via the thermocouple (23).

## Revendications

1. Four tubulaire à haute température pour la pyrolyse comprenant un agencement concentrique constitué d'un carter tubulaire, d'une isolation thermique, d'un tube chauffant fritté monté dans des supports de tube chauffant électriquement isolants et résistants aux températures élevées, d'un tube céramique à deux trous monté sur support et d'un tube capillaire pour pyrolyse, le tube chauffant fritté pouvant être alimenté avec un courant de chauffage à partir d'une alimentation en tension, **caractérisé en ce que**
chaque support de tube chauffant (08) présente au moins trois broches céramique (09) disposées radialement et pouvant être fixées de façon déplaçable radialement à chaque fois dans un collier de serrage (10) fixé sur le carter tubulaire (02), broches entre les pointes desquelles le tube chauffant fritté (06) est monté.

2. Four tubulaire à haute température selon la revendication 1,
**caractérisé en ce que**
les au moins trois colliers de serrage (10) d'un support de tube chauffant (08) sont logés dans un couvercle de carter (13), lequel comprend des évidements (14) pour les broches céramique (09) et termine le carter tubulaire (02) de façon centrée.

3. Four tubulaire à haute température selon la revendication 2,
**caractérisé en ce que**
les colliers de serrage (10) présentent des assemblages vissés (11) pour la fixation des broches céramique (09) et le logement dans le couvercle de carter (13).

4. Four tubulaire à haute température selon la revendication 1,
**caractérisé en ce que**
trois broches céramique (09) par support de tube chauffant (08) sont disposées en formant un angle de 120° les unes par rapport aux autres.

5. Four tubulaire à haute température selon la revendication 1,
**caractérisé en ce que**
le tuyau chauffant fritté (06) est conçu sous forme de corps fritté en carbure de silicium.

6. Four tubulaire à haute température selon la revendication 1,
**caractérisé en ce que**
le tube céramique à deux trous (15) est monté dans deux trous de logement (17) qui sont disposés de façon centrale dans des supports de centrage (18) fixés sur le carter tubulaire (02), le logement du tube céramique à deux trous (15) s'effectuant en formant une seconde fente d'air (16) concentrique par rapport au tube chauffant fritté (06).

7. Four tubulaire à haute température selon la revendication 6,
**caractérisé en ce que**
chaque support de centrage (18) présente trois nervures de soutien (19) disposées en formant un angle de 120° les unes par rapport aux autres dans le sens radial ou en angle par rapport au plan radial, lesquelles présentent les trous de logement (17) en leur point d'intersection.

8. Four tubulaire à haute température selon la revendication 1,
**caractérisé en ce que**
le tube céramique à deux trous (15) présente le tube capillaire à pyrolyse (22) dans une première ouverture de passage (21) et un thermocouple (24) dans une seconde ouverture de passage (21).

9. Four tubulaire à haute température selon la revendication 1,
**caractérisé en ce que**
l'isolation (04) est conçue sous forme d'enveloppe isolante (05) sur le côté intérieur du carter tubulaire (02) en formant une première fente d'air (07) concentrique par rapport au tube chauffant fritté (06).

10. Four tubulaire à haute température selon la revendication 9,
**caractérisé en ce que**
l'enveloppe isolante (05) est formée à base de matériau fibreux céramique qui est disposé entre le carter tubulaire (02) et un tube intérieur (03) concentrique.

11. Four tubulaire à haute température selon la revendication 10,
**caractérisé en ce que**
le tube intérieur (03) est à base d'une tôle perforée de forme cylindrique en acier fin.

12. Four tubulaire à haute température selon la revendication 10,
**caractérisé en ce que**
les couvercles de boîtier (13) sont logés de façon centrée dans le carter tubulaire (02).

13. Four tubulaire à haute température selon la revendication 1 et la revendication 8,
**caractérisé en ce que**
l'alimentation en tension s'effectue au moyen d'un convertisseur de puissance pour générer une tension continue pulsée et d'un régulateur de température, qui reçoit la température REELLE au moyen du thermocouple (23).
